# EUROPEAN PATENT APPLICATION

(11) **EP 4 844 861 A1**
(43) Date of publication of application: **25.11.2026**
(21) Application number: 25831223.0
(22) Date of filing: 20.06.2025
(51) Int. Cl.: H01M 10/0562

(54) **SULFUR-BROMINE-HYDRIDE-BASED SOLID ELECTROLYTE COMPOUND FOR ALL-SOLID-STATE BATTERY AND METHOD FOR PREPARING SAME**

(30) Priority: 20.06.2024 KR 20240080469; 19.06.2025 KR 20250080855
(71) Applicant: LG Energy Solution, Ltd., Seoul 07335 (KR); Gwangju Institute of Science and Technology, Gwangju 61005 (KR)
(72) Inventor: LEE, Wonrak, Daejeon 34122 (KR); KIM, Sangryun, Gwangju 61005 (KR); LEE, Taegyoung, Gwangju 61005 (KR); KIM, Ji Young, Daejeon 34122 (KR); KIM, Youngbok, Daejeon 34122 (KR)
(74) Representative: Goddar, Heinz J.
(86) International application number: PCT/KR2025/008569
(87) International publication number: WO 2025/264028

(57) **Abstract**

The present invention provides a solid electrolyte compound for all-solid-state batteries represented by Chemical Formula 1 and a manufacturing method thereof.

## Description

### [TECHNICAL FIELD]

The present application claims the benefit of priority based on Korean Patent Application No. 10-2024-0080469 filed on June 20, 2024 and Korean Application No. 10-2025-0080855 filed on June 19, 2025, and all contents disclosed in the documents of the corresponding Korean patent applications are incorporated as a part of the present specification.

The present invention relates to a sulfur-bromine-hydride-based solid electrolyte compound for all-solid-state batteries and a manufacturing method thereof.

### [BACKGROUND ART]

Recent intensive research has led to remarkable advances in all-solid-state batteries where both electrolyte and electrodes are in solid state. Achieving high lithium ion conductivity of solid electrolytes is one of the important requirements for using them in all-solid-state batteries. Efforts have been made in this direction to develop solid electrolyte materials that exhibit superionic conductivity at room temperature, including sulfides, oxides, halides, and complex hydrides.

Among various solid electrolytes reported to date, argyrodite-type sulfide materials have attracted particular attention due to their high ionic conductivity and simple synthesis route. Li₇PS₆, one of the representative argyrodite-type lithium ion conductors, has a face-centered cubic lattice (space group F43m, Z = 4) of sulfur anions (S²⁻, 4a site), and PS₄³⁻ polyhedra (P at 4b site with S at 16e site) and additional S²⁻ (4d site) are located at octahedral and tetrahedral sites, respectively. Lithium ions (24g and 48h sites) form a disordered cage-like arrangement around S²⁻ (4d site), enabling high lithium ion transport. Moreover, substitution of S²⁻ with other anions such as halogen anions (Cl⁻, Br⁻ and I⁻) and/or oxide anions (O²⁻) is known to further improve ionic conductivity and chemical stability.

Despite impressive conductive properties, argyrodite-type solid electrolytes with multiple anions still have inherent limitations related to limited electrochemical stability. In fact, most existing argyrodite-type solid electrolytes exhibit narrow electrochemical windows, making it difficult to combine them simultaneously with high-voltage anodes and low-voltage cathodes. In particular, because they exhibit very low stability at low potentials, high-energy density cathode materials such as lithium metal (theoretical capacity = 3,860 mAh g⁻¹, potential = -3.04 V vs. standard hydrogen electrode (SHE)) have not been applied to all-solid-state batteries using argyrodite-type solid electrolytes.

Therefore, as part of efforts to expand the material diversity of argyrodite-type solid electrolytes with multiple anions and solve problems related to low potential stability, Li₇₋ₓPS₆₋ₓ (BH₄)_{x-y} Br_{y} (1.0 ≤ x ≤ 2.0 and 0 ≤ y ≤ x) solid electrolytes containing three different anions, namely S²⁻, borohydride anion (BH₄⁻) and bromine anion (Br⁻). Li(BH₄) complex hydride known as a highly reducing solid electrolyte was used to replace S²⁻ and/or Br⁻ (4a and 4d positions) in the structure with BH₄⁻. Experimental results showed that as x (amount of BH₄⁻) increases, argyrodite-type solid electrolytes with less y (amount of Br⁻) are stabilized, improving lithium ion conductivity as well as stability against lithium metal.

### Cathode.

In addition, the manufactured solid electrolytes enable excellent performance of all-solid-state batteries applying high-nickel content oxide cathodes and lithium metal anodes.

Argyrodite-type ion conductors containing BH₄⁻ have been studied for lithium solid electrolytes and all-solid-state batteries. However, the continuous compositional changes of sulfide anions, halide anions, and hydride anions within the argyrodite structure explored in the present disclosure (Table S1) and the material system including the developed batteries are different from those previously reported.
(Non-patent document 1) Journal of Power Sources 244 (2013) 707-710

### [DISCLOSURE OF THE INVENTION]

### [TECHNICAL PROBLEM]

Argyrodite-type ion conductors have recently attracted much attention as solid electrolyte systems for all-solid-state batteries due to their high ionic conductivity, excellent mechanical deformability, and simple material processability. However, they generally lack rate and lifetime characteristics due to poor chemical and electrochemical stability at low potentials when operating in batteries with high energy density metal electrodes.

The present invention is proposed to solve the above-mentioned problems, and an objective of the present invention is to provide a novel argyrodite-type solid electrolyte for all-solid-state batteries containing S²⁻, BH₄⁻ and Br together.

### [TECHNICAL SOLUTION]

To achieve the above objective, according to one embodiment of the present invention,

the present invention provides a hydro-sulfide-based solid electrolyte compound for all-solid-state batteries represented by the following Chemical Formula 1.

[Chemical Formula 1] Li₇₋ₓPS₆₋ₓ(BH₄)_{x-y}Br_{y}, (1.0 ≤ x ≤ 2.0 and 0 ≤ y ≤ x)

Further, the x may be 0.0≤x≤2.0, and y may be 0≤y≤2.0.

Further, the x may be 0.7≤x≤1.2, and y may be 0.75≤y≤1.0.

Further, the x may be 1.2≤x≤1.7, and y may be 0≤y≤0.5.

Further, the x may be 1.7≤x≤2.2, and y may be 0≤y≤0.5.

Further, the x and y may be x-y>0.5.
According to one embodiment of the present invention,
the present invention provides a method for manufacturing the sulfur-bromine-hydride-based solid electrolyte compound for all-solid-state batteries, comprising: a) mixing a lithium sulfide compound, a phosphorus sulfide compound and a lithium bromide compound; b) milling the mixture mixed in step a); c) compressing the mixture milled in step b) into pellets and then heat-treating; and d) grinding the pellets heat-treated in step c) and then ball-milling with LiBH₄.

Further, each of the steps may be performed in an Ar atmosphere.

### [EFFECTS OF THE INVENTION]

In the case of using the Li₇₋ₓPS₆₋ₓ(BH₄)_{x-y}Br_{y} solid electrolyte according to the present invention, lithium ion conductivity may be improved and the inherent electrochemical stability limitations of argyrodite type materials may be solved. In addition, compositions having high -x and low -x may promote formation of argyrodite phase while improving lithium ion conductivity and stability against lithium metal anodes.

### [BRIEF DESCRIPTION OF DRAWINGS]

FIG. 1 is a diagram schematically illustrating a synthesis process of Li₇₋ₓPS₆₋ₓ(BH₄)_{xy}Br_{y} (1.0 ≤ x ≤ 2.0 and 0 ≤ y ≤ x), which is a hydro-sulfide-based solid electrolyte for all-solid-state batteries according to one embodiment of the present invention.
FIG. 2A shows the composition of Li₇ₓPS₆ₓ(BH₄)_{x-y}Br_{y} synthesized within a quasi-quaternary phase equilibrium diagram of Li₂S-P₂S₅-LiBH₄-LiBr (x=1.0, 1.5 and 2.0, 0≤y≤x). FIG. 2B is an XRD pattern for Li₇ₓPS₆ₓ(BH₄)_{x-y}Br_{y} (x = 1.0, 0 ≤ y ≤ x). FIG. 2C is an XRD pattern for Li₇ₓPS₆ₓ(BH₄)_{x-y}Br_{y} (x = 1.5, 0 ≤ y ≤ x). FIG. 2D is an XRD pattern for Li₇ₓPS₆ₓ(BH₄)_{x-y}Br_{y} (x = 2.0, 0 ≤ y ≤ x).
FIG. 3A is an XRD pattern for a compound with y = 1.125, x = 1.5 in the composition of Li₇ₓPS₆ₓ(BH₄)_{x-y}Br_{y}, and FIG. 3B is an XRD pattern for a compound with y = 0.375 at x = 1.5.

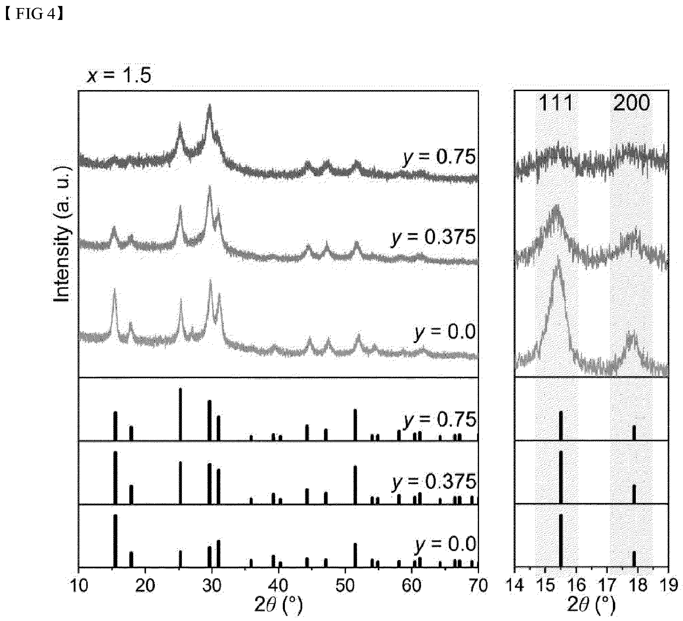

FIG. 4 is experimental and simulation XRD patterns for x = 1.5 (y = 0.0, 0.375 and 0.75) in the composition of Li₇ₓPS₆ₓ(BH₄)_{x-y}Br_{y}.
FIG. 5 is Raman spectra of compounds with x = 2.0 and y = 0.0, x = 1.0 and y = 0.0 in the composition of Li₇ₓPS₆ₓ(BH₄)_{x-y}Br_{y}.
FIG. 6 is Nyquist plots (left) of compounds with x = 1.0 and different y at 25°C, and an expanded Nyquist plots (right) of high frequency regions.
FIG. 7 is Nyquist plots (left) of compounds with x = 1.5 and different y at 25°C, and an expanded Nyquist plots (right) of high frequency regions.
FIG. 8 is Nyquist plots (left) of compounds with x = 2.0 and different y at 25°C, and an expanded Nyquist plots (right) of high frequency regions.
FIG. 9 is an equivalent circuit used to fit the Nyquist plots of FIGs. 6 to 8.
FIGs. 10A to 10G shows Arrhenius plots of lithium ion conductivity for Li₇ₓPS₆ₓ(BH₄)_{x-y}Br_{y}. FIGs. 10A, 10C and 10E are Arrhenius plots of lithium ion conductivity. FIGs. 10B, 10D and 10F show lithium ion conductivity and activation energy. FIG. 10G is lithium ion conductivity of Li₇PS₆Li_{3.5}PS_{2.5}Br_{3.5}Li_{3.5}PS_{2.5}(BH₄)_{3.5} quasi-ternary system.
FIG. 11A is a schematic of NCM/Li all-solid-state battery, FIG. 11B is a first charge-discharge profile at 0.1C, FIG. 11C is a dQ/dV curve, FIG. 11D is charge-discharge profiles at 0.05, 0.1, 0.2, 0.5 and 1C (charge rates are fixed at 0.1C for 0.1, 0.2, 0.5, 1C) and FIG. 11E is cycling performance of discharge capacity and coulombic efficiency at 0.5C.
FIG. 12 is a graph showing cycling performance of discharge capacity and coulombic efficiency at 0.1C.
FIG. 13 is a graph showing a first charge-discharge profile at 0.5C.
FIG. 14 is Nyquist plots and fitting curves of Li/Li symmetric cells using a compound with x = 2.0 and y =0.0 as a solid electrolyte. The inserted is an equivalent circuit used for fitting.

### [BEST MODE FOR CARRYING OUT THE INVENTION]

Hereinafter, the present invention will be described in more detail to help understanding of the present invention.

Terms or words used in the present specification and claims should not be construed as being limited to conventional or dictionary meanings, and should be interpreted as meanings and concepts consistent with the technical idea of the present invention based on the principle that an inventor may appropriately define concepts of terms to describe his/her own invention in the best way.

The present invention provides a hydro-sulfide-based solid electrolyte compound for all-solid-state batteries represented by the following Chemical Formula 1.

[Chemical Formula 1] Li₇₋ₓPS₆₋ₓ(BH₄)_{x-y}Br_{y}, (1.0 ≤ x ≤ 2.0 and 0 ≤ y ≤ x)

Specifically, in the hydro-sulfide-based solid electrolyte compound for all-solid-state batteries according to the present invention, in Chemical Formula 1, the x may be 0.0≤x≤2.0, and y may be 0≤y≤2.0.

The hydro-sulfide-based solid electrolyte compound for all-solid-state batteries according to the present invention is specifically in a low x region (0.7≤x≤1.2, for example x = 1.0), an increase in y (high Br⁻ content) may promote formation of argyrodite structure to improve lithium ion conductivity, whereas in a high x region (1.2≤x≤2.2, for example x = 1.5 and 2.0), the same change in y interferes with formation of y, which is because as the x value increases, Li vacancy increases, increasing ion transport paths and improving ionic conductivity.

Specifically, considering structural analysis and EIS measurement results for the hydro-sulfide-based solid electrolyte compound for all-solid-state batteries according to the present invention, the hydro-sulfide-based solid electrolyte compound for all-solid-state batteries according to the present invention may have high lithium ion conductivity in compositions having low x (0.7≤x≤1.2) and high y (0.75≤y≤1.0).

Therefore, in the hydro-sulfide-based solid electrolyte compound for all-solid-state batteries according to the present invention, the x in Chemical Formula 1 may be 0.7≤x≤1.2, and y may be 0.75≤y≤1.0.

Considering structural analysis and EIS measurement results for the hydro-sulfide-based solid electrolyte compound for all-solid-state batteries according to the present invention, the hydro-sulfide-based solid electrolyte compound for all-solid-state batteries according to the present invention may have high lithium ion conductivity in compositions having high x (1.2≤x≤2.2) and low y (0≤y≤0.5).

Therefore, in the hydro-sulfide-based solid electrolyte compound for all-solid-state batteries according to the present invention, the x in Chemical Formula 1 may be 1.2≤x≤1.7, and y may be 0≤y≤0.5.

Further, in the hydro-sulfide-based solid electrolyte compound for all-solid-state batteries according to the present invention, the x in Chemical Formula 1 may be 1.7≤x≤2.2, and y may be 0≤y≤0.5.

Further, in the hydro-sulfide-based solid electrolyte compound for all-solid-state batteries according to the present invention, in Chemical Formula 1, the x and y may be 0.5<x-y<2.

Further, the hydro-sulfide-based solid electrolyte compound for all-solid-state batteries according to the present invention showed in electrochemical analysis that high x compositions improve stability against lithium metal cathodes. Based on these results, we developed a high-voltage all-solid-state battery that is reversibly cycled with high-nickel content oxide cathodes and lithium metal anodes using two different argyrodite-type solid electrolytes for anode and cathode, respectively.

The results presented herein provide insights into hetero-anionic ion conductor design strategies and high-voltage all-solid-state battery development strategies using such solid electrolytes.
According to one embodiment of the present invention,
the present invention provides a method for manufacturing the sulfur-bromine-hydride-based solid electrolyte compound for all-solid-state batteries, comprising: a) mixing and then milling a lithium sulfide compound, a phosphorus sulfide compound and a lithium bromide compound; b) compressing the mixture milled in step a) into pellets and then heat-treating; and c) grinding the pellets heat-treated in step b) and then ball-milling with LiBH₄.

The method for manufacturing the sulfur-bromine-hydride-based solid electrolyte compound for all-solid-state batteries of the present invention may be synthesized through a three-step route including two ball-milling steps and one heat treatment step.

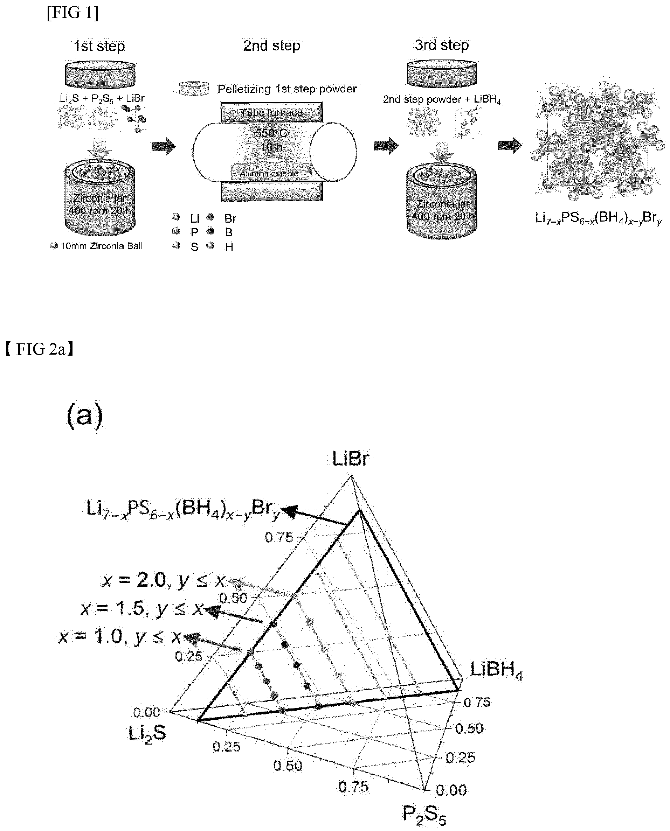

For example, as depicted in S1 of FIG. 1, in step a), lithium sulfide (Li₂S), phosphorus pentasulfide (P₂S₅), and lithium bromide (LiBr) were weighed in stoichiometric molar ratios to match the final composition. Subsequently, these materials may be placed in a zirconia ball mill jar containing zirconia balls and ball-milled using a planetary mill. At this time, for compositions without LiBr (y=0), only Li₂S and P₂S₅ were used.

Thereafter, in step b), the mixture obtained through ball-milling may be compressed into pellets and then transferred to a quartz tube furnace connected to a glove box. The sample is then heat-treated under Ar atmosphere.

In step c), the heat-treated pellets were ground into powder and then ball-milled with LiBH₄ weighed stoichiometrically under the same conditions as in the first step. For compositions without LiBH₄ (x=y), synthesis may be completed after the second step.

Further, each of the steps may be performed in an Ar atmosphere.

### [EMBODIMENT FOR CARRYING OUT THE INVENTION]

The following examples are only for helping understanding of the present invention, and the present invention is not limited only to the following examples.

### 1. Experiment

### 1.1 Material synthesis

Li₇₋ₓPS₆₋ₓ(BH₄)_{x-y}Br_{y} (x = 1.0, 1.5, 2.0, 0 ≤ y ≤ x) solid electrolytes were synthesized through a three-step route including two ball-millings and one heat treatment, which is shown in S1 of FIG. 1. In the first step of synthesis, lithium sulfide (Li₂S, Sigma Aldrich, 99.98%), phosphorus pentasulfide (P₂S₅, Sigma Aldrich, 99%), and lithium bromide (LiBr, Sigma Aldrich, 99.995%) were weighed stoichiometrically to match the final composition. These materials were placed in a 45 mL capacity zirconia ball mill jar together with 20 zirconia balls of 10 mm diameter, and then milled for 20 hours at 400 rpm (repeating 15 minutes milling, 5 minutes stop) using a planetary ball mill (PULVERISETTE 7, Fritch). For y = 0 (composition without LiBr), only Li₂S and P₂S₅ were used.

In the second step, the ball-milled mixture was compression molded into pellets of 10 mm diameter, then transferred to a quartz tube electric furnace (FDS 001, LIV energy) connected to a glove box and heat-treated at 550°C for 10 hours under an Ar atmosphere.

In the third step, the heat-treated pellets were pulverized using a mortar and pestle, then ball-milled again under the same conditions as step 1 together with LiBH₄ (Acros Organics, 95%) weighed in stoichiometric ratio. Compositions with x = y (when LiBH₄ is not included) were completed in synthesis after step 2. All synthesis processes were performed in an Ar atmosphere (O₂ ≤ 0.01 ppm, H₂O ≤ 0.01 ppm).

### 1.2 Property analysis

For phase analysis, X-ray diffraction (XRD; SmartLab, Rigaku) measurements were performed in the range of 20 = 10°-70° at intervals of 0.01° using CuKα radiation (wavelength λ = 1.5406 Å for Kα₁, 1.5444 Å for Kα₂). Powder for XRD measurement was injected into thin glass capillary tubes of 0.5 mm diameter in an Ar atmosphere, then sealed with liquid paraffin.

A Raman spectrometer (LabRAM HR Evolution, Horiba) was used for molecular bonding analysis.

### 1.3 Ion conductivity measurement

100-120 mg of solid electrolyte powder was placed in a PET mold of 10 mm diameter and uniaxially compressed at 277.4 MPa pressure. Subsequently, gold powder (Mitsuwa chemicals, 99.9%) was applied to both sides of the solid electrolyte, then compressed again at 184.9 MPa. The assembled cell was placed in a stainless steel electrochemical cell and sealed with a torque of 5.0 Nm.

Ion conductivity was measured using alternating current impedance method (EIS; MTZ-35, BioLogic) in the temperature range of 25-80°C and frequency range of 0.01 Hz-1 MHz.

### 1.4 Battery assembly and electrochemical testing

The cathode composite was prepared by weighing LiNi_{0.9}Co_{0.05}Mn_{0.05}O₂(NCM), Li₆PS₅Cl, and Super C in a weight ratio of 80:19:1 and mixing for 15 minutes using a mixer (AVM-10, AllforLAB). For cell assembly, 100 mg of solid electrolyte powder was placed in a PET mold of 10 mm diameter and uniaxially compressed at 295.8 MPa. 10 mg of cathode composite was uniformly applied on top of it, then compressed again at 425.3 MPa. As an anode, a pure lithium foil of 10 mm diameter (Honjo Metal Co. ) was placed on the opposite side of the solid electrolyte. The assembled pellet-type cell was sealed in a stainless steel electrochemical cell with a torque of 5.0 Nm.

The prepared NCM/Li cells were cycled in the range of 2.5-4.3 V (voltage reference: Li/Li⁺) in CCCV mode (terminal current: 210 × 0.1 × X C-rate (X = 0.1, 0.5) mA g⁻¹, terminal voltage: 4.3 V). The battery cycler used was WBCS3000 (WonATech. Co. ), and 1 C was defined as 210 mA g⁻¹.

Stability against lithium metal anodes was evaluated through Li/Li symmetric cells. 100-120 mg of solid electrolyte was placed in a PET mold of 10 mm diameter and compressed at 277.4 MPa, then pure lithium foil was placed on top and additionally compressed at 18.5 MPa. Subsequently, the cell was sealed in a stainless steel electrochemical cell with a torque of 5.0 Nm, and all cell assembly processes were performed in Ar atmosphere.

### 2. Results and Discussion

### 2.1 Material synthesis and analysis

FIG. 2A shows a quasi-ternary diagram representing the compositions within the Li₂S-P₂S₅-LiBH₄-LiBr quasi-quaternary system investigated in the present invention. The multi-anionic compounds synthesized in this diagram may be represented as Li₇₋ₓPS₆₋ₓ(BH₄)_{x-y}Br_{y}, where increases in x and y mean BH₄⁻ substitution of S²⁻ and Br⁻ substitution of BH₄, respectively. Hereinafter, the present invention proceeded with experiments focusing on compositions of x = 1.0, 1.5, 2.0 (red, blue, green dots in FIG. 1A) and 0 ≤ y ≤ x.

First, the synthesis route of Li₇₋ₓPS₆₋ₓ(BH₄)_{x-y}Br_{y} solid electrolytes was examined. For this purpose, experiments were performed on two compositions of y = 0.375 and y = 1.125 (compositions containing all three anions) under fixed conditions of x = 1.5. According to existing reports, when LiBH₄ and P₂S₅ are ball-milled, by-products containing P₂S₂⁴⁻ polyatomic anions are easily generated, and intermediate phase β-Li₃PS₄ is formed through reaction of Li₂S and P₂S₅ and is known to promote formation of final argyrodite structure⁷⁾.

Based on these previous studies, two synthesis methods were compared. Both methods include three steps of ball-milling, heat treatment, and re-ball-milling, and each method is as follows.
1) The first method is a method of ball-milling Li₂S, P₂S₅, and LiBr together, then performing heat treatment, and finally performing re-ball-milling with LiBH₄.
2) The second method is a method of performing primary ball-milling with only Li₂S and P₂S₅, then adding LiBr and LiBH₄ in the secondary ball-milling step, with heat treatment performed in the same manner.

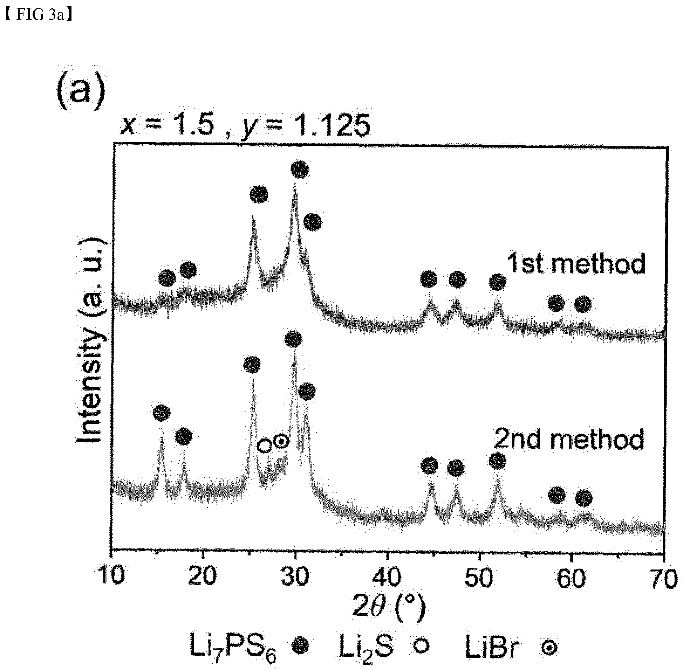

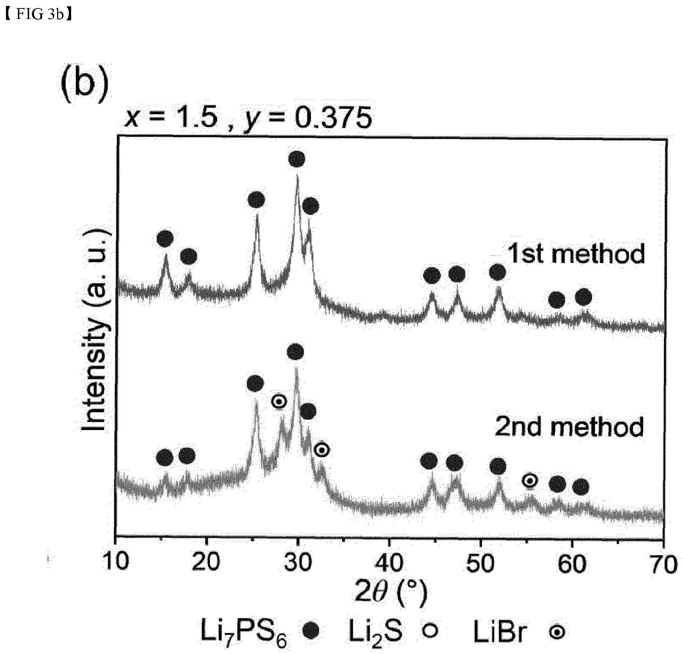

Through this comparative experiment, it was confirmed that method 1 generates higher purity argyrodite-type compounds, which is shown in FIG. 3. Subsequently, all synthesis was performed by method 1.

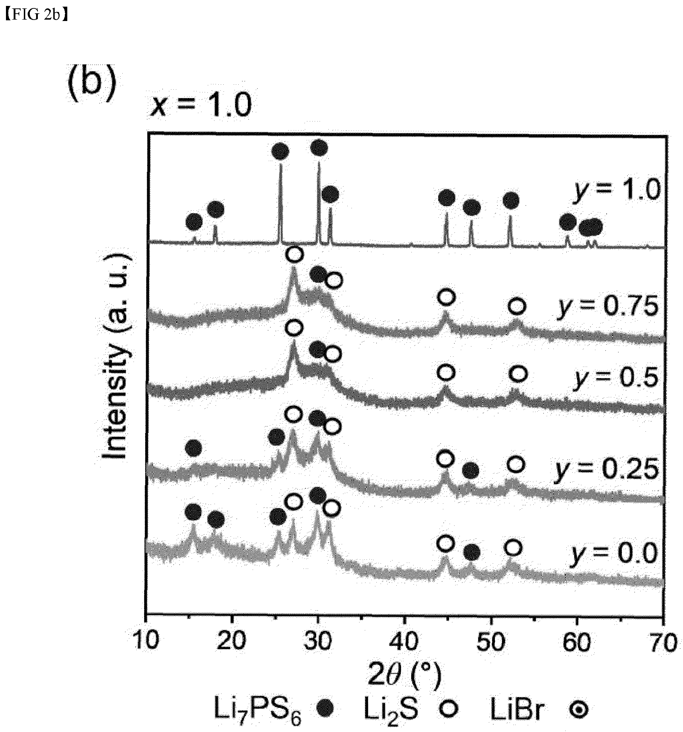

All compositions shown in FIG. 2A were synthesized through the above method (see FIG. 1). In the composition of x = 1.0, y = 0.0, both argyrodite phase and XRD peaks of starting material Li₂S were observed (FIG. 2B). As y increased (as the amount of Br increased), the peak intensity of argyrodite phase increased and unreacted Li₂S peaks decreased. In particular, in the composition of x = 1.0, y = 1.0, no peaks corresponding to starting materials or impurity phases were observed, which means that y increase promotes argyrodite phase formation.

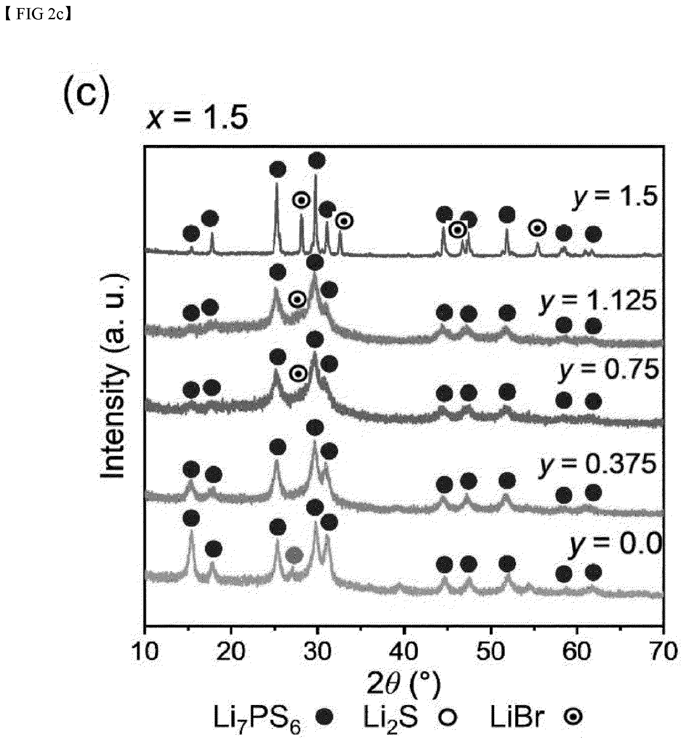

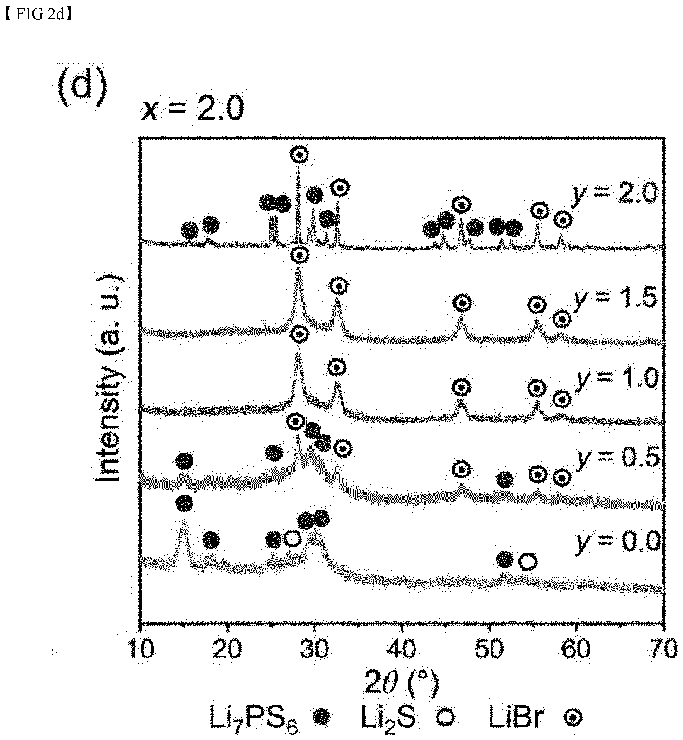

On the other hand, in high concentration compositions of x = 1.5 and 2.0, phase formation showed opposite trends. As shown in FIGs. 2C and 2D, as y increases, argyrodite phase formation is hindered, and in the case of x = 2.0, y = 2.0, argyrodite peaks were not observed. Also, as y increases, the (111) peak intensity decreases, which suggests continuity of multi-anionic substitution. In all compositions, additional diffraction peaks due to superlattice or anionic ordering were not observed, which means that all anions coexist randomly at the same crystallographic positions (4a and 4d). However, lattice parameter comparison is difficult due to low crystallinity.

The argyrodite phase formation tendency was particularly pronounced in compositions having two anions. Compositions of y = 0 or x = y are located at the ends of each line in FIG. 1A and contain only two anions. For example, x = 1.0, y = 0 corresponds to Li₆PS₅BH₄, and x = 1.0, y = 1.0 corresponds to Li₆PS₅Br. In compositions of x = y, as x increases, argyrodite phase formation is hindered, whereas in compositions of y = 0, x increase promotes argyrodite phase formation. Even in high concentration x and low concentration y compositions, small amounts of residual starting materials such as Li₂S and LiBr were confirmed.

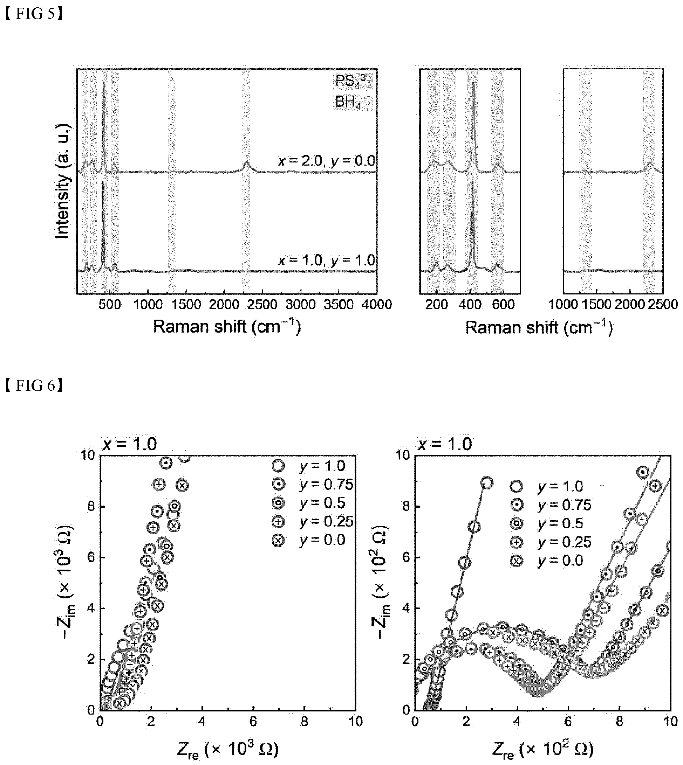

FIG. 5 shows Raman spectroscopy results of x = 1.0, y = 1.0 (Li₆PS₅Br) and x = 2.0, y = 0.0 (Li₅PS₄(BH₄)₂), and these two compositions showed lithium ion conductivity of 10⁻³ S/cm or higher at room temperature in EIS analysis. Both compounds showed symmetric stretching (417 cm⁻¹), symmetric bending (200-210 cm⁻¹), asymmetric stretching (573-575 cm⁻¹), and asymmetric bending (270-280 cm⁻¹) vibrational modes of PS₄³⁻ polyhedra. Also, in the composition of x = 2.0, y = 0.0, additional peaks corresponding to bending (1380 cm⁻¹) and stretching (2300 cm⁻¹) vibrations of BH₄ were observed at 1350 cm⁻¹ and 2280 cm⁻¹.

These results suggest that various anions such as S², Br, and BH₄ may coexist within the same crystal structure, which is consistent with previous reports that these anions may exist randomly at 4a and 4d crystallographic positions.

In particular, in high concentration compositions such as x = 2.0, it was confirmed that y decrease promotes argyrodite phase formation. That is, BH₄ may be substituted in higher proportions than Br within the argyrodite structure, and as a result, may maintain a stable phase even in structures with less S². This suggests that the low synthesis energy of disordered structures containing BH₄, together with the low formation/ionization energy of LiBH₄, which is an ionic crystal (Li and BH₄), and the disordered nature within multi-anionic systems contribute to stabilization of such structures.

### 2.2 Lithium ion conductivity

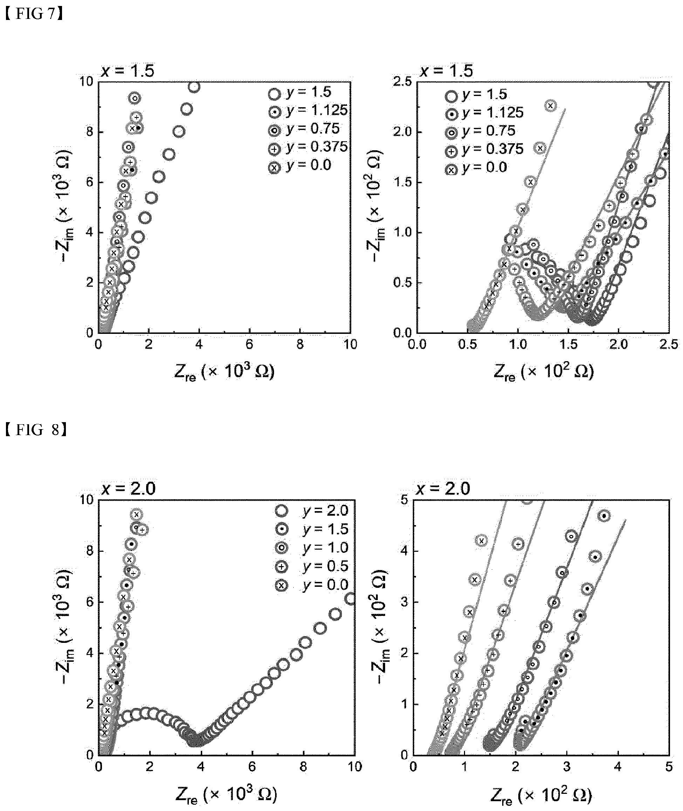

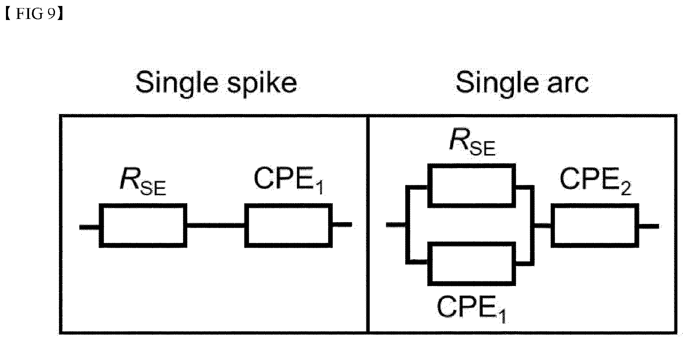

Lithium ion conductivity of Li₇₋ₓPS₆₋ₓ(BH₄)_{x-y}Br_{y} solid electrolytes was evaluated through EIS (impedance spectroscopy) measurements using gold (Au) blocking electrodes. For measurements, pellet samples of 10 mm diameter were prepared by cold-pressing method. All Nyquist plots showed one or no semicircle forms (see FIGs. 6 to 8), which could be quantitatively analyzed using the equivalent circuit presented in FIG. 9. Also, all compounds showed linear increases with temperature increase in Arrhenius plots of log ion conductivity. Lithium ion conductivity and activation energy at 25°C are summarized in Table 1 below.

**[Table 1]**

| Li_{7-*x*}PS₆₋ₓ(BH₄)_{*x*-*y*}Br*_{y}* (*x* = 1.0, 1.5, 2.0, 0 ≤ *y* ≤ *x*) | | Ionic conductivity (S cm⁻¹) | Activation energy (kJ mol⁻¹) |
|---|---|---|---|
| *x* = 1.0 | Li₆PS₅Br (*y* = 1.0) | 1.8 × 10⁻³ (25 °C) | 32.5 |
| | Li₆PS₅(BH₄)_{0.25}Br_{0.75} (*y =* 0.75) | 1.9 × 10⁻⁴ (25 °C) | 35.1 |
| | Li₆PS₅(BH₄)_{0.5}Br_{0.5} (*y* = 0.5) | 1.5 × 10⁻⁴ (25 °C) | 36.7 |
| | Li₆PS₅(BH₄)_{0.75}Br_{0.25} (*y* = 0.25) | 2.0 × 10⁻⁴ (25 °C) | 37.5 |
| | Li₆PS₅BH₄ (*y* = 0.0) | 1.9 × 10⁻⁴ (25 °C) | 38.5 |
| *x* = 1.5 | Li_{5.5}PS_{4.5}Br_{1.5} (*y* = 1.5) | 3.4 × 10⁻⁴ (25 °C) | 29.0 |
| | Li_{5.5}PS_{4.5}(BH₄)_{0.375}Br_{1.125} (*y* = 1.125) | 7.1 × 10⁻⁴ (25 °C) | 35.7 |
| | Li_{5.5}PS_{4.5}(BH₄)_{0.75}Br_{0.75} (*y* = 0.75) | 5.8 × 10⁻⁴ (25 °C) | 37.4 |
| | Li_{5.5}PS_{4.5}(BH₄)_{1.125}Br_{0.375} (*y* = 0.375) | 1.0 × 10⁻³ (25 °C) | 37.0 |
| | Li_{5.5}PS_{4.5}(BH₄)_{1.5} (*y* = 0.0) | 1.9 × 10⁻³ (25 °C) | 30.2 |
| *x* = 2.0 | Li₅PS₄Br_{2.0} (*y* = 2.0) | 2.5 × 10⁻⁵ (25 °C) | 32.4 |
| | Li₅PS₄(BH₄)_{0.5}Br_{1.5} (*y* = 1.5) | 4.1 × 10⁻⁴ (25 °C) | 33.7 |
| | Li₅PS₄(BH₄)_{1.0}Br_{1.0} (*y* = 1.0) | 5.5 × 10⁻⁴ (25 °C) | 35.9 |
| | Li₅PS₄(BH₄)_{1.5}Br_{0.5} (*y* = 0.5) | 1.5 × 10⁻³ (25 °C) | 35.1 |
| | Li₅PS₄(BH₄)_{2.0} (*y* = 0.0) | 2.8 × 10⁻³ (25 °C) | 31.2 |

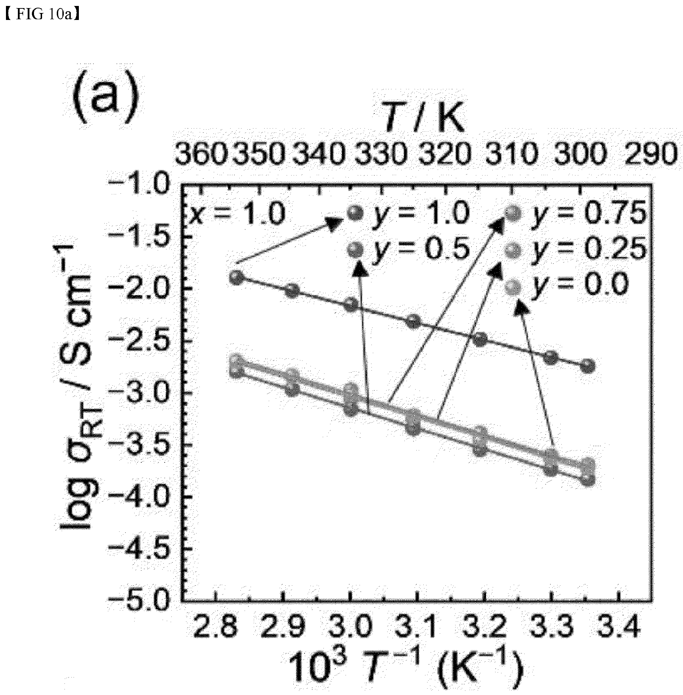

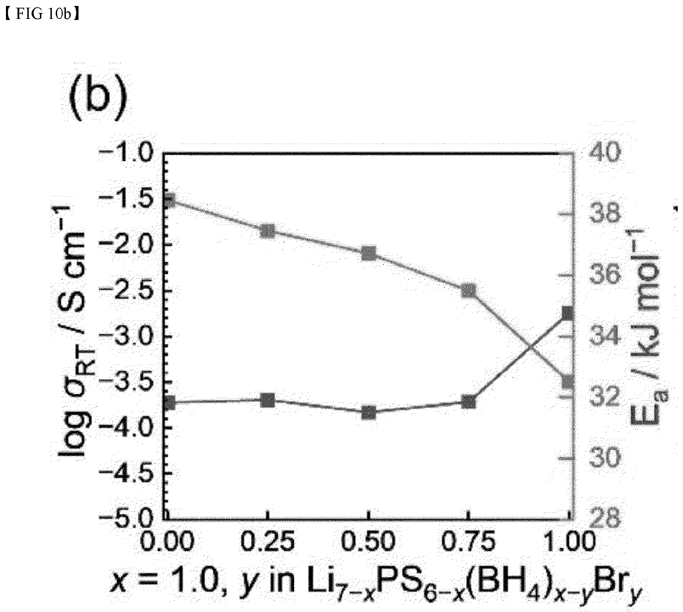

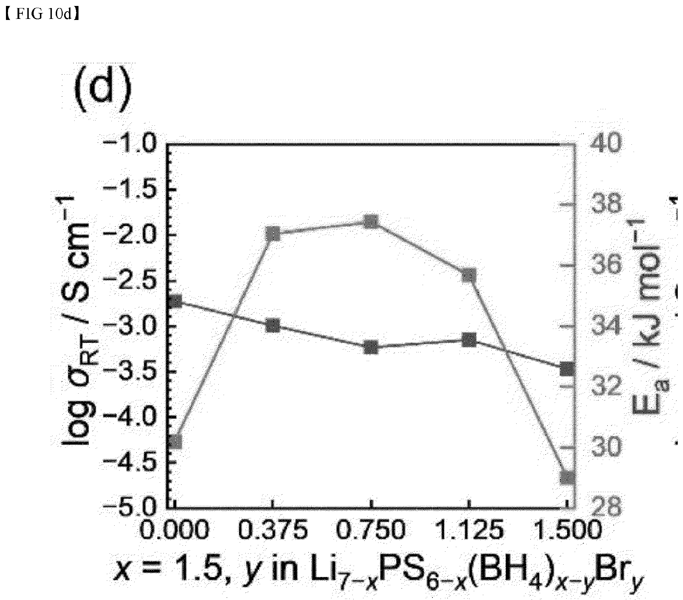

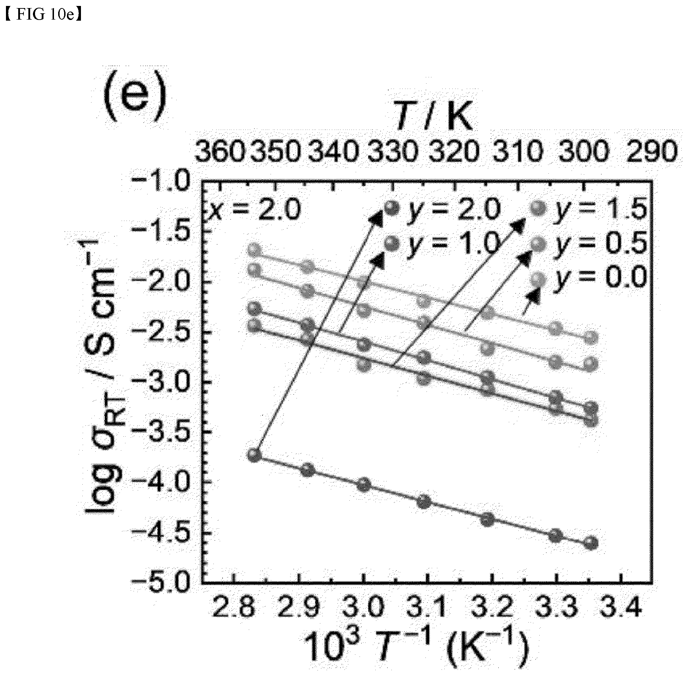

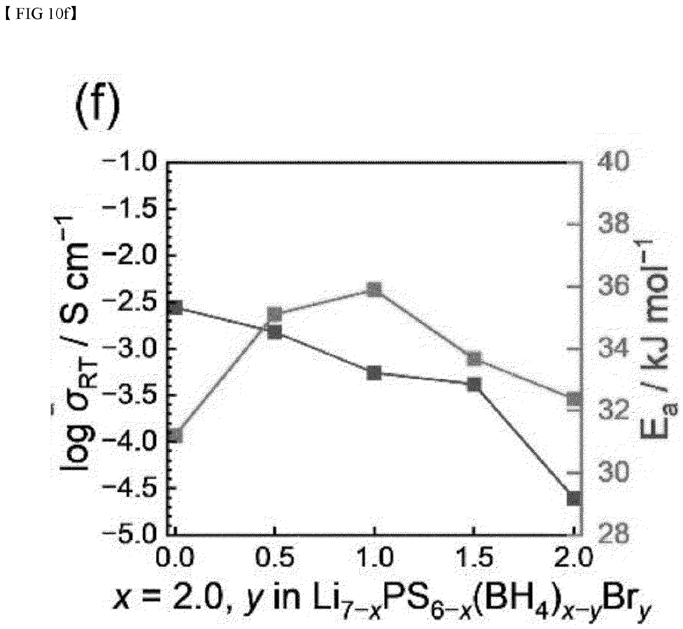

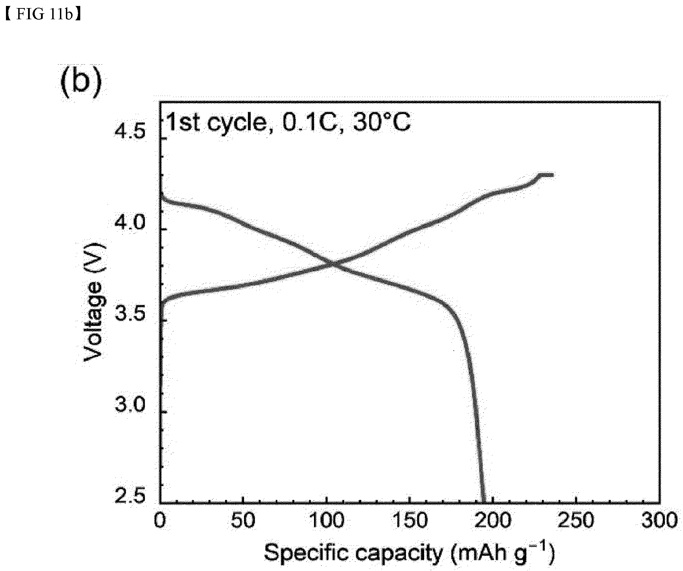

Looking at EIS results of compositions with x = 1.0, 0 ≤ y ≤ 1.0, it may be confirmed that the composition of y = 1.0 shows higher lithium ion conductivity and lower activation energy (Ea) (FIGs. 10A and 11B). The ion conductivity at 25°C of the composition x = 1.0, y = 1.0 was measured as 1.9 × 10⁻³ S cm⁻¹, and the activation energy was 32.5 kJ mol⁻¹, which are values that agree well with existing reports. Structural analysis results of this region confirmed that as y increases, the amount of Br introduction increases, and as a result, single-phase argyrodite structure is formed. Therefore, the high ion conductivity and low activation energy of this composition are judged to be due to formation of high-purity materials.

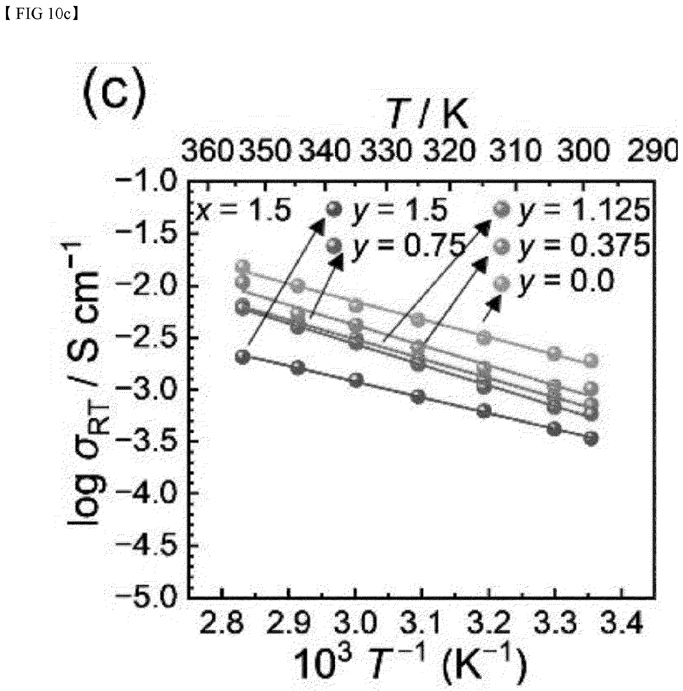

Meanwhile, in high concentration compositions such as x = 1.5 and 2.0, conductivity characteristic changes according to y showed opposite trends. As shown in FIGs. 10C to 10F, as y decreases, ion conductivity increases. Such conductivity changes are because y decrease induces stabilization of argyrodite phase, as confirmed in the structural analysis above. Meanwhile, activation energy shows a tendency to increase until y increases to half of x, then decreases again when y increases further. That is, in compositions containing all three anions of S²⁻, BH₄⁻, and Br⁻, the ion conduction barrier is interpreted to be higher.

For this reason, in this region, superior argyrodite-type ion conductor phases were formed in compositions with low y. For example, in the case of compositions x = 1.5, y = 0 and x = 2.0, y = 0, lithium ion conductivity at 25°C is 1.9 × 10⁻³ S cm⁻¹ and 2.8 × 10⁻³ S cm⁻¹, respectively, and activation energy is 30.2 kJ mol⁻¹ and 31.2 kJ mol⁻¹, respectively.

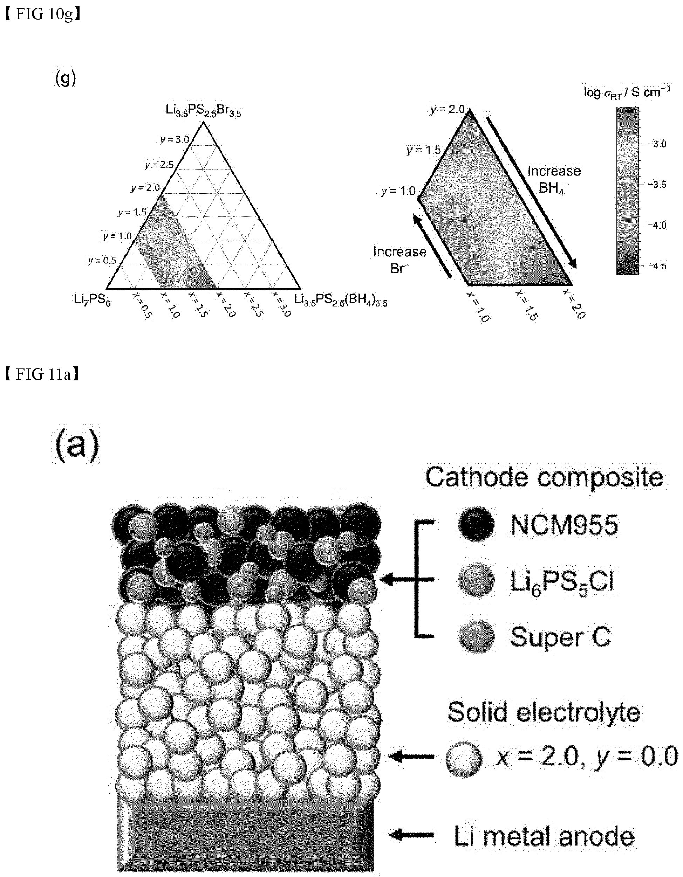

Summarizing structural analysis and EIS measurement results, lithium superionic conductive argyrodite phases were shown to be formed in compositions with low x and high y (x = 1.0, y = 1.0) or compositions with high x and low y (x = 2.0, y = 0). Such conductivity distribution may also be directly confirmed in the heat map of FIG. 10G. This result again shows that compositions containing only two anions have better conductive properties than compositions mixed with three anions.

Also, the effect of multiple anions on ion conductivity was particularly pronounced in regions with high x and low y. It is noteworthy that this result is contrary to recently reported "multi-element introduction removes ion migration barriers". This difference suggests that multi-element effects may vary greatly depending on structural differences of anions used, thereby showing that deeper follow-up research on this topic is needed. In particular, precise atomic-level analysis is needed on how structural interactions between polyatomic anions such as BH₄⁻ used in the present invention and monatomic anions affect crystal structure and ion migration.

### 2.3 NCM/Li all-solid-state battery

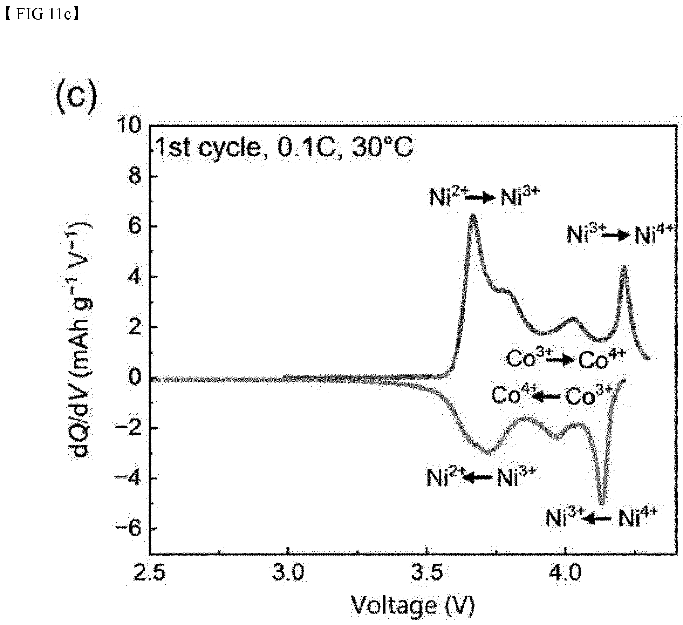

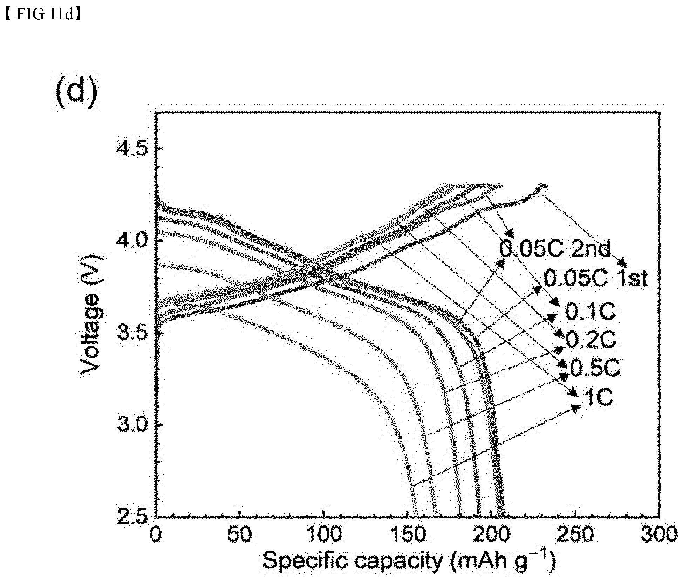

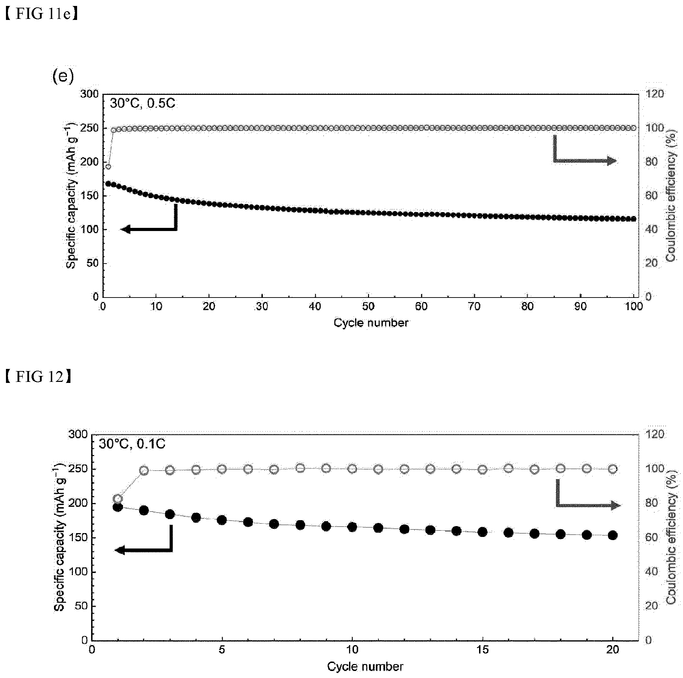

Among the compositions synthesized in the present invention, the compound x = 2.0, y = 0.0 (Li₅PS₄(BH₄)₂) showed the highest ion conductivity among all compositions, and this was applied as a solid electrolyte of NCM/Li all-solid-state batteries to evaluate performance. Since this solid electrolyte contains highly reducing BH₄⁻ hydride anions, instead of using it directly between cathode and anode, a design was introduced that uses two different types of argyrodite-type solid electrolytes as cathode electrolyte layer and anode electrolyte layer, respectively (see FIG. 11).

Specifically, the solid electrolyte of composition x = 2.0, y = 0.0 was used directly on the anode side (interface with lithium metal) without separate surface treatment or interface modification. The cathode composite was composed by mixing NCM cathode with high nickel content (90%), Li₆PS₅Cl solid electrolyte, and Super C conductive agent. Li₆PS₅Cl is the most widely studied material among argyrodite-type solid electrolytes and is well known to show excellent performance in NCM-based batteries.

However, in most existing studies, since Li₆PS₅Cl solid electrolyte is chemically/electrochemically unstable against lithium metal, lithium metal alloys had to be used as anodes. In contrast, in the present invention, pure lithium metal was directly applied as an anode. Detailed procedures for cell fabrication are described in the experimental section.

FIG. 11B shows an initial cycle voltage curve measured in the range of 2.5-4.3 V (vs. Li/Li⁺) under 0.1C current conditions (1C = 210 mA g⁻¹). At this time, charge capacity was 235.5 mAh g⁻¹ and discharge capacity was 194.6 mAh g⁻¹. Also, in the derivative voltage (dQ/dV) curve (FIG. 11C), peaks corresponding to oxidation and reduction reactions of each transition metal were clearly observed, showing that stable electrochemical reactions occurred within the battery.

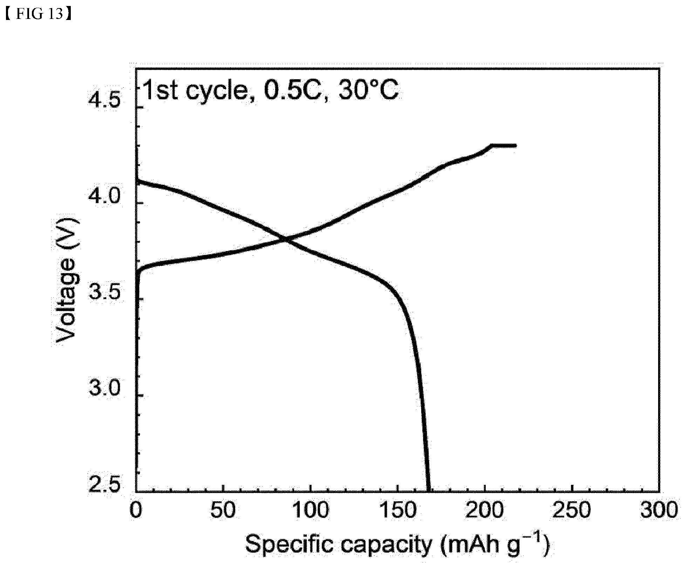

This all-solid-state battery also showed excellent rate characteristics and cycle stability. After initial cycles, starting from 0.05C, the discharge rate was increased by 2, 4, 10, and 20 times, maintaining 94.2%, 88.6%, 81.2%, and 75.7% of the reference capacity of 204.9 mAh g⁻¹, respectively (FIG. 11D). Also, under 0.1C conditions, 81.0% of the capacity of 189.5 mAh g⁻¹ from the 2nd cycle was maintained even after 20 cycles (FIG. 12). Even when measured at a higher rate of 0.5C, the discharge capacity was 115.7 mAh g⁻¹ after 100 cycles (FIGs. 11E and 13), and the coulombic efficiency saturated at about 100% during cycling, showing very stable cycle characteristics.

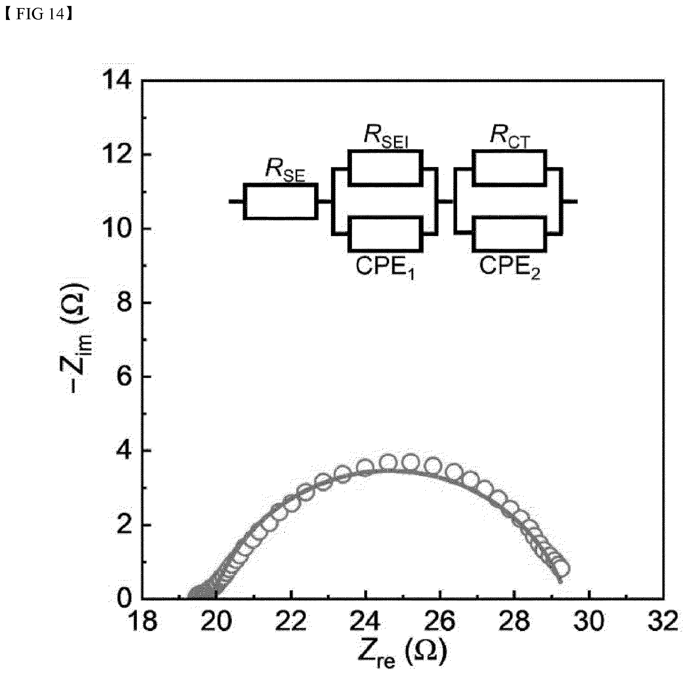

Interface stability between lithium metal anode and x = 2.0, y = 0.0 solid electrolyte was further examined through EIS analysis using lithium symmetric cells (Li/Li) (FIG. 14 and Table 2).

**[Table 2]**

| Li_{7-*x*}PS_{6-*x*}(BH₄)_{*x*-*y*}Br*_{y}* | *R*_{SE} (Ω) | *R*_{SEI} (Ω) | CPE₁ (F) | R_{CT} (Ω) | CPE₂ (F) |
|---|---|---|---|---|---|
| *x* = 2.0, *y* = 0.0 | 19.4 | 0.47 | 8.4 × 10⁻⁵ | 9.55 | 5.1 × 10⁻² |

Table 2 above shows quantitative values of circuit components in the EIS analysis shown in FIG. 14, and interface resistance (Ω·cm²) was calculated by dividing R_SEI by 2 and then normalizing by surface area.

As a result, interface resistance and charge transfer resistance were measured as 0.18 Ω·cm² and 3.45 Ω·cm², respectively, which means that the present solid electrolyte forms a very stable interface with lithium metal. This stability is interpreted to be due to highly reducing BH₄⁻ hydride anions.

These results suggest that various hydride-based anions may serve as very promising candidates for design of argyrodite-type solid electrolytes requiring stability with lithium metal anodes, and show that the application range of all-solid-state batteries may be greatly expanded.

### 3. Conclusion

In conclusion, we developed Li₇₋ₓPS₆₋ₓ(BH₄)_{x-y}Br_{y} solid electrolytes integrating multiple anions to improve lithium ion conductivity and solve the inherent electrochemical stability limitations of argyrodite type materials. Specifically, compositions having high -x and low -x may promote formation of argyrodite phase while improving lithium ion conductivity and stability against lithium metal anodes. Also, solid electrolytes containing large amounts of BH₄⁻ hydride anions in the structure enable excellent cycle performance of NCM/Li all-solid-state batteries. From a broader perspective, the insights provided in this study may be applied to various solid electrolytes with atomic anion-based frameworks (e.g., sulfides, oxides, halides, etc.) for wider battery applications.

## Claims

1. A sulfur-bromine-hydride-based solid electrolyte compound for all-solid-state batteries represented by the following Chemical Formula 1.
[Chemical Formula 1] Li₇₋ₓPS₆₋ₓ(BH₄)_{x-y}Br_{y}, (0.5 ≤ x ≤ 2.5 and 0 ≤ y ≤ x)

2. The sulfur-bromine-hydride-based solid electrolyte compound for all-solid-state batteries according to claim 1,
wherein the x is 0.0≤x≤2.0, and y is 0≤y≤2.0.

3. The sulfur-bromine-hydride-based solid electrolyte compound for all-solid-state batteries according to claim 1,
wherein the x is 0.7≤x≤1.2, and y is 0.75≤y≤1.0.

4. The sulfur-bromine-hydride-based solid electrolyte compound for all-solid-state batteries according to claim 1,
wherein the x is 1.2≤x≤1.7, and y is 0≤y≤0.5.

5. The sulfur-bromine-hydride-based solid electrolyte compound for all-solid-state batteries according to claim 1,
wherein the x is 1.7≤x≤2.2, and y is 0≤y≤0.5.

6. The sulfur-bromine-hydride-based solid electrolyte compound for all-solid-state batteries according to claim 1,
wherein the x and y are x-y>0.5.

7. A method for manufacturing the sulfur-bromine-hydride-based solid electrolyte compound for all-solid-state batteries according to claim 1, comprising:
a) mixing and then milling a lithium sulfide compound, a phosphorus sulfide compound and a lithium bromide compound;
b) compressing the mixture milled in step a) into pellets and then heat-treating; and
c) grinding the pellets heat-treated in step b) and then ball-milling with LiBH₄.

8. The method for manufacturing the sulfur-bromine-hydride-based solid electrolyte compound for all-solid-state batteries according to claim 7,
wherein each of the steps is performed in an Ar atmosphere.
